# FASCICULE DE BREVET EUROPEEN

(11) **EP 0 798 160 B1**
(45) Date de publication et mention de la délivrance du brevet: **05.09.2001**
(21) Numéro de dépôt: 97400636.3
(22) Date de dépôt: 21.03.1997
(51) Int. Cl.: B60N 3/06, B60N 3/04

(54) **Revêtement repose-pieds pour tapis de sol de véhicules automobiles**
Abdeckung zur Entlastung der Füsse für eine Kraftfahrzeugfussmatte
Footrest covering for motor vehicle floor mats

(30) Priorité: 29.03.1996 FR 9603937
(43) Date de publication de la demande: 01.10.1997
(73) Titulaire: RENAULT, 92109 Boulogne-Billancourt (FR)
(72) Inventeur: Ponceau Philippe, 78610 Le Perray en Yvelines (FR)

(56) Documents cités:
- DE-A- 3 702 629
- FR-A- 2 689 081
- GB-A- 2 179 898
- US-A- 3 860 284

## Description

L'invention concerne un revêtement repose-pieds pour tapis de sol de véhicules automobiles constitué par une surface de contact d'endroit et une couche d'envers formée par un matériau cellulaire thermoplastique en contact avec la surface de plancher du véhicule.

La publication FR-A-2013992 décrit un tapis de sol de véhicule automobile qui possède une zone repose-pieds de forte résistance à l'usure, produite en soumettant la surface fibreuse du tapis à la chaleur et à la pression.

La publication DE-A-1962527 décrit un tapis de sol protecteur d'une aire de pratique de sports, constitué par un support de base élastique à structure cellulaire solidaire d'un revêtement élastique de surface.

Un tel tapis de sol possède une résistance à la compression et une élasticité améliorée destinée à absorber les forces d'impact consécutives aux évolutions des utilisateurs de ladite aire.

La publication WO-91/16218 décrit un tapis de sol de véhicule qui possède une zone repose-pieds amovible fixée au moyen de rivets.

La publication FR-A-2689081 décrit un plancher secondaire formé d'une couche de matériau cellulaire et de cloisons de retenues égales à l'épaisseur de ladite couche.

Le problème non résolu par les tapis de sol connus réside dans le fait qu'ils absorbent imparfaitement la fraction d'énergie transmise au plancher du véhicule, à la suite des chocs frontaux subis par le véhicule. Il en résulte que les membres inférieurs des occupants des places frontales du véhicule sont soumis à une fraction des efforts consécutifs aux déformations de la surface de plancher du véhicule susceptibles de générer des lésions audits membres.

Selon l'invention le côté opposé de la surface de contact porte des cloisons de retenue déformables de la couche d'envers, lesdites cloisons s'étendent parallèlement au-dessus de la surface de plancher à la distance "e" de précompression du matériau cellulaire avant flexion desdites cloisons à la suite d'une déformation permanente de la surface de plancher.

D'autres caractéristiques et avantages du revêtement apparaîtront à la lecture de la description d'un mode de réalisation de celui-ci, en référence aux dessins annexés dans lesquels :
- la figure 1 est une représentation perspective de la partie avant de l'habitacle d'un véhicule automobile portant un revêtement repose-pieds conforme à l'invention.

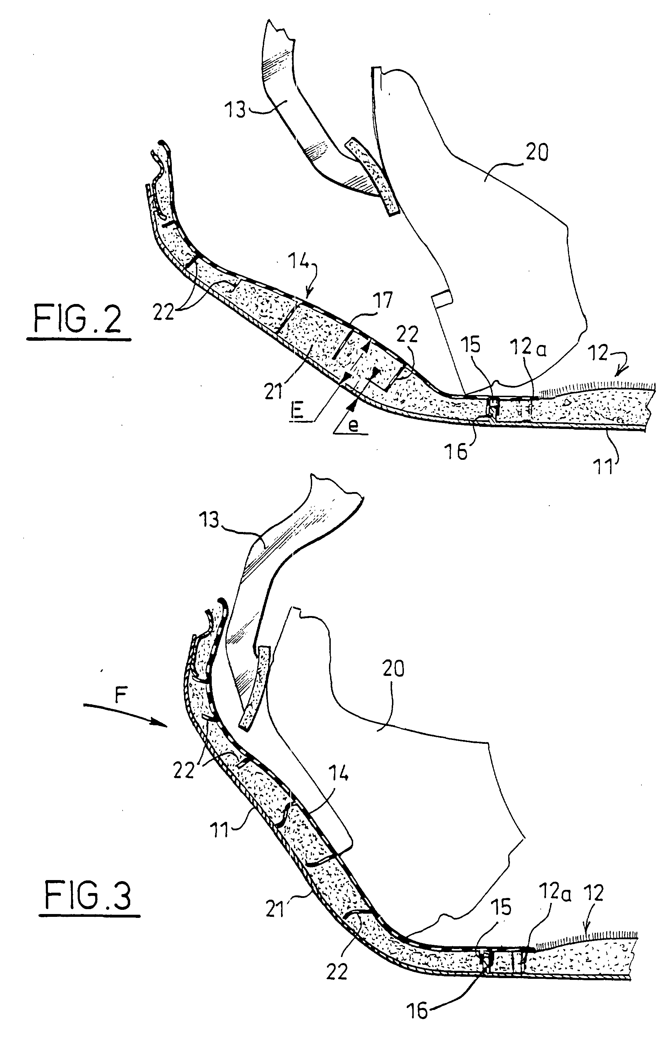

- la figure 2 est une section longitudinale du revêtement repose-pieds représenté à la figure 1, réalisée dans le plan du pédalier de commande du véhicule.
- la figure 3 est une section longitudinale du revêtement représenté à la figure 2 réalisée à la suite d'une déformation du plancher du véhicule.

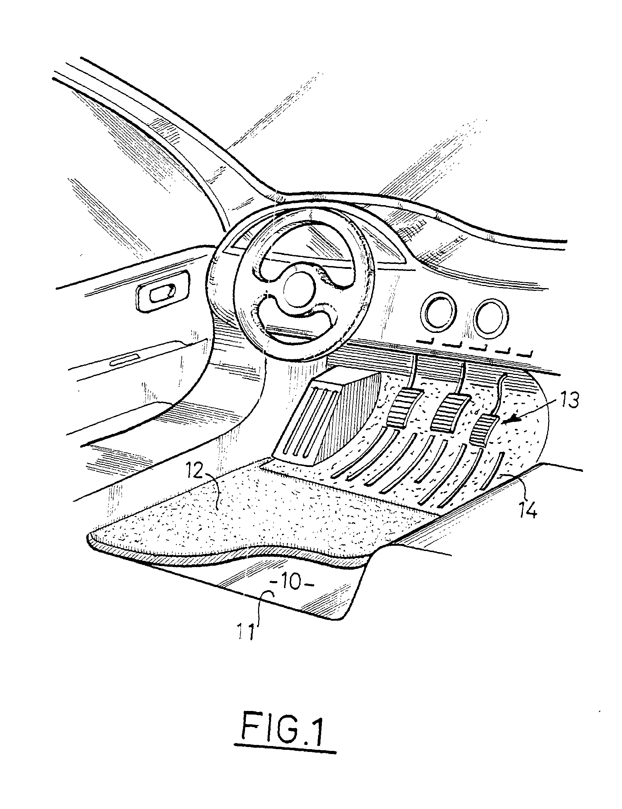

Ainsi que cela est représenté à la figure 1, la surface de plancher 10 du véhicule est portée par une tôle 11 et est revêtue par un tapis de sol 12 dont la face supérieure porte une formation de textile synthétique.

Le bord antérieur 12a du tapis 12 se prolonge sous le pédalier de commande 13 par un revêtement repose-pieds 14. Le revêtement 14 porte des moyens d'agrafage 15 respectivement emboîtés sur des rivets 16 soudés sur la tôle 11.

Le revêtement 14 possède de manière connue en soie une surface de contact 17 d'endroit en polypropylène tournée vers l'habitacle occupé par le passager matérialisé par ses pieds 20.

Le revêtement 14 possède également une couche d'envers 21 constituée par un matériau cellulaire thermoplastique au contact avec la surface de plancher 10.

Selon l'invention, la surface de contact 17 porte des cloisons de retenue 22 de la couche d'envers 21 de sorte que la hauteur desdites cloisons soit inférieure ou égale à l'épaisseur E de ladite couche.

Dans le but de permettre une certaine absorption d'énergie sous l'effet d'efforts de poussée F générés au cours de la déformation de la tôle de plancher 11, les cloisons de retenue 22 s'étendent parallèlement au-dessus de la surface de plancher 10 à une distance "e".

La distance "e" permet une certaine précompression du matériau cellulaire constitutif de la couche 21 sous l'effet de contraintes périodiques exercées par la tôle de plancher.

Par contre par suite d'une déformation permanente de la tôle 11, les cloisons 22 notamment de hauteur égale à l'épaisseur de la couche E sont soumises localement aux efforts de flexion et favorisent une substantielle absorption d'énergie au cours de la déformation permanente de la surface de plancher.

Sans sortir du cadre de l'invention il est bien évident que le revêtement repose-pieds tel que décrit, peut comporter une zone d'appui latérale de recouvrement du passage de roue et/ou intégrer des marquages d'identification en conformité avec le modèle concerné du véhicule.

## Revendications

1. Revêtement repose-pieds (14) pour tapis de sol de véhicules automobiles constitué par une surface de contact (17) d'endroit et une couche d'envers (21) formée par un matériau cellulaire thermoplastique au contact avec la surface de plancher (10) du véhicule, caractérisé par le fait que le côté opposé de la côté opposé de surface de contact (17) porte des cloisons de retenue (22) de la couche d'envers (21), qui s'étendent parallèlement au-dessus de la surface de plancher (10) à la distance "e" de précompression du matériau cellulaire avant flexion desdites cloisons (22) à la suite d'une déformation permanente de ladite surface de plancher (10).

## Claims

1. Footrest covering (14) for motor vehicle floor mats formed by a front contact surface (17) and a rear layer (21) formed by a thermoplastic cellular material in contact with the floor surface (10) of the vehicle, **characterised in that** the opposite side of the contact surface (17) bears retaining partitions (22) of the rear layer (21) which extend in parallel above the surface of the floor (10) at the distance "e" of precompression of the cellular material prior to bending of these partitions (22) as a result of a permanent deformation of the floor surface (10).

## Patentansprüche

1. Belag zur Fußabstützung (14) für Bodenmatten von Kraftfahrzeugen, der aus einer oberseitigen Kontaktfläche (17) und einer unterseitigen Schicht (21) besteht, welche von einem thermoplastischen Schaumstoff gebildet wird, der die Bodenoberfläche (10) des Fahrzeugs berührt, **dadurch gekennzeichnet**, daß die der Kontaktfläche (17) gegenüberliegende Seite Zwischenwände zum Festhalten (22) der unterseitigen Schicht (21) trägt, die sich parallel über der Bodenoberfläche (10) mit einem Abstand "e" der Vorverdichtung des Schaumstoffes vor der Biegung dieser Zwischenwände (22) infolge einer dauerhaften Verformung der Bodenfläche (10) erstrecken.
